# EUROPÄISCHE PATENTSCHRIFT

(11) **EP 3 150 302 B1**
(45) Veröffentlichungstag und Bekanntmachung des Hinweises auf die Patenterteilung: **17.07.2019**
(21) Anmeldenummer: 15187522.6
(22) Anmeldetag: 30.09.2015
(51) Int. Cl.: B22F 3/105, B23K 26/10, B29C 67/04, B23K 26/082, G02B 26/08

(54) **VERFAHREN ZUR STEUERUNG DER LASERSTRAHLAUSLENKUNG**
METHOD FOR CONTROLLING LASER BEAM DEFLECTION
PROCEDE DE COMMANDE DE LA DEVIATION DE RAYONNEMENT LASER

(43) Veröffentlichungstag der Anmeldung: 05.04.2017
(73) Patentinhaber: Siemens Aktiengesellschaft, 80333 München (DE)
(72) Erfinder: Dürr, Matthias, 90473 Nürnberg (DE)

(56) Entgegenhaltungen:
- WO-A1-2015/141032
- DE-A1-102013 103 006
- DE-T5-112010 004 503
- JP-A- S57 179 818
- US-A- 5 582 752
- US-A- 5 618 285

## Beschreibung

Die Erfindung betrifft ein Verfahren zur Laserstrahlauslenkung für die Bearbeitung von Bestrahlungspunkten auf einem Bestrahlungsfeld mittels eines von einem Laser erzeugten Laserstrahls für laserbasierte Additive Manufacturing Prozesse, aufweisend zumindest einen ersten und einen zweiten orthogonal drehbaren stehenden Spiegel, über den der Laserstrahl reflektierbar ist, zum Führen des Laserstrahls zum Bestrahlungsfeld, und wobei der erste Spiegel an einer ersten Achse befestigt ist und wobei der zweite Spiegel an einer zweiten Achse befestigt ist, siehe z.B. WO 2015/141032 A1.

In vielen Unternehmen fast aller Industriezweige ist die Anwendung verschiedener Rapid-Prototyping-Verfahren, wie z.B. der additiven Fertigung, fester Bestandteil bei der Entwicklung neuer Erzeugnisse geworden. Ständig kürzer werdende Produktentwicklungs- und Markteinführungszeiten sowie der gewachsene Druck zur Zeit- und Kosteneinsparung erfordern geeignete Verfahren zur Herstellung von Bauteil- und Werkzeugmustern innerhalb weniger Stunden möglichst aus seriennahen, hochfesten Werkstoffen, wie zum Beispiel Stahl.

Bei der additiven Fertigung, selektives Laserstrahlschmelzen /-sintern, Stereolitographie in Flüssigkeiten etc., handelt es sich um eine Gruppe von Prozessen, die dadurch gekennzeichnet sind, dass dreidimensionale Bauteile hergestellt werden, indem schichtweise im Wesentlichen zweidimensionale Schichten (bzw. Substrat) aufgebaut werden. Im Allgemeinen sind die Schichten jeweils sehr dünn (zum Beispiel zwischen 20 und 100 Mikrometer), und es werden viele Schichten der Reihe nach gebildet, wobei sich die zweidimensionale Form bei jeder Schicht ändert, damit sich das gewünschte endgültige, dreidimensionale Profil ergibt. Im Gegensatz zu herkömmlichen Fertigungsprozessen, bei denen zur Bildung eines gewünschten Bauteilprofils Werkstoff abgetragen wird, wird bei additiven Fertigungsprozessen zur Bildung eines endkonturgetreuen oder endkonturnahen fertigen Bauteils fortschreitend Material hinzugefügt.

Hierzu ist die Laserlichtquelle, z.B. ein Laserscanner mit zwei Spiegeln, typischerweise mit einem Galvanoskop/Galvanometer verbunden, welcher die Spiegel bewegt, so dass der Strahl auf einen Punkt oder eine definierte Linie geführt wird. Dadurch wird, zusammen mit der unterschiedlichen Laserstrahlintensität, der Energieeintrag durch den Laser in das Material bzw. Substrat lokal bestimmt. Hierbei treten jedoch folgende Probleme auf:
Zum einen benötigt der Laserscanner eine sehr schnelle diskontinuierliche mechanische Bewegung der Spiegel, aus welcher Probleme mit der Trägheit und dem Beschleunigung/Abbremsen resultieren.

Ein jeder zweite Bestrahlungspunkt benötigt eine definierte Bewegung des Strahls von einem ersten Bestrahlungspunkt. Da diese Bewegung ein individueller Prozess ist, müssen hierfür eine hohe Anzahl an individuellen Prozessparametern bereitgestellt werden. Zu den Prozessparametern zählen Koordinatentranslationen, Pfadlänge, relative Stellung der Spiegel sowie deren Bewegungsbereich, Laserscannercharakteristika, Beschleunigung, Zielkoordinaten und Temperaturausgleich etc. All diese Parameter stellen jedoch mögliche Fehlerquellen dar.

Zum anderen werden für den Laser zudem zumindest zwei Bewegungsmoden notwendig: einmal im Arbeitsmodus; hier ist der Laser aktiv, sowie einem im Verfahrmodus. Hier ist der Laser inaktiv. Da beim Verfahrmodus keine prozessbedingten Bedingungen (Einkopplung des Laserstrahls in das Substrat) notwendig sind, kann der Verfahrmodus, soweit das Lasersystem dies zulässt, schneller ausgeführt werden.

Bestrahlungsstrategien wie Mehrfachbestrahlung durch einen einzelnen Laser (Lasereinheit) für z.B. Laserstrahlschmelzen, in denen ein trägheitsfrei orientierbarer Elektronenstrahl quasi simultan auf mehrere Stellen des Bestrahlungsfelds projiziert wird, z.B. zum lokalen Vorheizen/Vorwärmen eines beliebigen zu bestrahlenden Bereiches, sind nicht bewerkstelligbar. Für die Vorwärmung werden im Stand der Technik mehrere Lasereinheiten gleichzeitig verwendet. Auch können Digital Light Processing-Chips verwendet werden, bei denen Bilder erzeugt werden, indem ein digitales Bild auf einen Lichtstrahl aufmoduliert wird. Aufgrund des geringen Energieeintrags wird die Anwendung jedoch auf SLA beschränkt und ist nicht übertragbar für Anwendungen bei denen ein höherer Energieeintrag notwendig ist, wie z.B. Laserstrahlschmelzen.

Heutzutage kann daher die Bearbeitung durch den Laser mit hinreichender Genauigkeit bewerkstelligt werden, jedoch nur unter erhöhtem Rechenaufwand/Berechnungsaufwand und Bestrahlungsstrategien. Jede zusätzliche Bewegung beeinflusst jedoch die Arbeitsleistung und die Genauigkeit von dem Bestrahlungsprozess.

Aus der Druckschrift DE112010004503T5 sind ein Verfahren und eine Vorrichtung zum abtragen dünner Schichten von einem Substrat mit einem Laser bekannt, wobei eine Lenkeinrichtung vorgesehen ist, die dazu geeignet ist, einen Laserspot des Lasers relativ zu einer Oberfläche des Substrats in zwei unterschiedliche Richtungen zu führen, wobei das Verfahren die Schritte aufweist: a) Bewegen des Substrats relativ zum Laser-spot; und b) Bewegen des Laserspots auf der Oberfläche des Substrats in einem geschlossenen Schleifenmuster durch Beaufschlagen der Lenkeinrichtung mit einer sinusförmigen harmonischen Oszillation in jeder der zwei unterschiedlichen Richtungen. Dadurch kann eine sehr gleichmäßige und zuverlässige Materialabtragung erreicht werden.

Aus der Druckschrift US 5618285 A geht ein System zum gleichmäßigen Abtragen von lebenden Gewebe mittels eines Lasers hervor, wobei eine Beschädigung von darunter liegenden Gewebeschichten vermieden werden soll.

Aus der Druckschrift JP 57179818 A geht die Darstellung von Lissajous-Figuren auf einem Display hervor, wobei ein Laserstrahl durch zwei oszillierende Spiegel abgelenkt wird.

Aus der Druckschrift US5582752 gehen ein Verfahren und eine Vorrichtung zum gleichmäßigen Bestrahlen von lebendem Gewebe mittels Laserlicht hervor, bei denen umgebendes Gewebe nicht beschädigt und insbesondere keine Löcher verursacht werden sollen.

Die Aufgabe der Erfindung ist es, ein Verfahren zur Steuerung der Laserstrahlauslenkung für die Bearbeitung von Bestrahlungspunkten zur generativen Herstellung zumindest eines Bereichs eines Bauteils anzugeben, bei dem ein sicheres und reproduzierbares Ergebnis erzeugt wird.

Die Aufgabe wird gelöst durch die Angabe eines Verfahrens zur Steuerung der Laserstrahlauslenkung für die Bearbeitung von Bestrahlungspunkten auf einem Bestrahlungsfeld mittels eines Laserstrahls für laserbasierte Additive Manufacturing Prozesse mit den Schritten:
- Führen des Laserstrahls zum Bestrahlungsfeld durch Reflektion von zumindest einem ersten über einen zweiten orthogonal drehbaren stehenden Spiegel,
- Befestigung des ersten Spiegels an einer ersten Achse und des zweiten Spiegels an einer zweiten Achse,
umfassend:
- Einer Anregung des ersten drehbaren Spiegels zu einer kontinuierlichen ersten Schwingung mit einer ersten Frequenz durch die erste Achse,
- Einer Anregung des zweiten drehbaren Spiegels zu einer kontinuierlichen zweiten Schwingung mit einer zweiten Frequenz durch die zweite Achse,
- Eines Ausgestaltens der ersten Frequenz unterschiedlich zur zweiten Frequenz und/oder Aufweisens einer Phasendifferenz von der ersten Schwingung zur zweiten Schwingung,
- Eines Aufweisens einer bekannten Position von jeder der beiden Achsen, so dass durch die bekannte Position der beiden Achsen die erste Schwingung synchron zur zweiten Schwingung ausbildbar ist,
- sodass eine positionsabhängige Bestrahlung der Be-strahlungspunkte auf dem Bestrahlungsfeld durch positionsabhängiges Ein-/Ausschalten des Lasers bei Erreichen/Verlassen von einem solchen Bestrahlungspunkt bewerkstelligt wird,
- wobei durch die erzeugten Schwingungen der Spiegel eine kontinuierliche Lissajous-Figur auf dem Bestrahlungsfeld beschrieben wird.

Es werden dadurch zwei "deterministische" synchronisierte Schwingungen (=die Position beider Achsen ist von Anfang an exakt bekannt) erzeugt. Durch die Erfindung wird ein fortlaufender oszillierender Status/Zustand für das Laserscanning erzeugt, welcher leicht und genau modelliert und optimiert werden kann. Auf diese Art wird die Komplexität der Dynamik der Spiegelbewegungen beträchtlich reduziert, welches einerseits die Kosten reduziert und andererseits die Stabilität und Vorhersagbarkeit des dynamischen Maschinenverhaltens verbessert.

Auch kann durch die bekannten, sich wiederholenden Positionen der Spiegel und daher der bekannten sich wiederholenden Positionen des Laserstrahls auf dem Bestrahlungsfeld nicht nur eine einfache Bestrahlung, sondern auch eine einfache Mehrfachbestrahlung der notwendigen Bestrahlungspunkte stattfinden. Die hier vorgeschlagene kontinuierliche Bewegung der Spiegel und das Bewegungsmuster passen inhärent zum Designparadigma von "lattice-Gitter" (Darstellung von geometrischen Körpern durch eine lokal modifizierte unendliche Serie von Elementen), welche gegenwärtig verwendet wird, um das volle Potential der Additiven Fertigungen in CAD Systemen (hohe Anzahl von Elementen, bionische Formen, räumliche Konsistenzen) zu nutzen.

In den Unteransprüchen sind weitere vorteilhafte Maßnahmen aufgelistet, die beliebig miteinander kombiniert werden können, um weitere Vorteile zu erzielen.

Erfindungsgemäss ist durch die erzeugten Schwingungen der Spiegel eine kontinuierliche Lissajous-Figur auf dem Bestrahlungsfeld beschreibbar. Bevorzugt ist die Lissajous-Figur geschlossen. So ergeben sich geschlossene Figuren nur, wenn das Verhältnis der Frequenzen rational ist, andernfalls endet die Schwingung "quasi" nie. In einem weiteren bevorzugten Ausführungsbeispiel sind die Frequenzen und die Phasenverschiebung so wählbar, dass die Lissajous-Figur ein Gitter mit hinreichender Genauigkeit ist. Bevorzugt ist die erste als auch die zweite Frequenz und die Phasenverschiebung so ausgebildet, dass die Lissajous-Figur als ein inneres verzerrungsarmes Idealgitter und ein äußeres Außengitter ausbildbar ist. Ersichtlich ist so ein Gitter, wenn die erste als auch die zweite Frequenz beispielsweise im Bereich von 10kHz, und die Phasenverschiebung im Bereich von 100 Hz liegt. Diese Lissajous-Figur wird dabei kontinuierlich auf das Bestrahlungsfeld projiziert, so dass eine iterative Bestrahlung der Bestrahlungspunkte vorgenommen werden kann. Vorzugsweise wird nur der innere Bereich der erzeugten Lissajous-Figur genutzt, nämlich das verzerrungsarmes "quasi-Gitter". Hier wird ein nahezu ideales Idealgitter projiziert, Verzerrungen in den Ecken, welche ungenaue Bestrahlung nach sich ziehen könnten, werden vermieden. Dabei wird das Idealgitter in genügend hoher Auflösung auf dem Pulverbett projiziert. Zudem weist eine Lissajous-Figur die für die Bestrahlung notwendige Stabilität auf.

In einer bevorzugten Ausgestaltung sind verschiedene Schichten zur iterativen Bestrahlung durch den Laserstrahl vorgesehen, wobei zur Bestrahlung einer ersten Schicht eine erste Lissajous-Figur und zur Bestrahlung einer weiteren Schicht eine zweite Lissajous-Figur durch die Spiegel erzeugbar ist, welche beide für die Bestrahlung der jeweiligen Schicht herangezogen werden. Somit können auch sehr einfach komplexe Geometrieen, insbesondere Geometrieen die eine hohe Komplexität im Randbereich aufweisen, auf einfache Art und Weise bestrahlt werden.

Auch kann natürlich eine iterative Mehrfachbestrahlung der Bestrahlungspunkte durch nur eine Lissajous-Figur bewerkstelligbar sein. Dadurch kann z.B. auf einfache Art und Weise eine Vorwärmung stattfinden.

In bevorzugter Ausgestaltung ist zur Positionsbestimmung der ersten als auch der zweiten Achse eine Kalibrierung der Achsen vorgesehen. Dadurch ist die Position der Achsen genau bekannt.

Bevorzugt werden die Achsen mit einem Motor und einer Steuerung oder Oszillatoren, insbesondere Spulen betrieben, um eine kontinuierliche Oszillation der beiden Spiegel zueinander zu erzeugen. Dabei ist der Motor vorteilhafterweise durch elektronisch oder digital synchronisierten Servomotoren ausgeführt. Die Oszillatoren behalten vorteilhafterweise durch ihren Aufbau eine Frequenz, insbesondere Resonanzfrequenz bei und/oder sind durch drehzahlstabile Motoren erzeugbar. Es existiert eine kontinuierliche, einfache Schwingung der mechanischen Teile im Gegensatz zu den getrennten (diskreten), hoch individuellen (einzelnen) Bewegungen. Hierdurch entstehen keine Probleme mit dem Abbremsen/Beschleunigen etc. wie es sie im Stand der Technik gibt. Zudem wird hierbei einfach die kontinuierliche Oszillation der beiden Spiegel erzeugt.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: eine Lissajous-Figur mit einer ersten und einer zweiten Frequenz von 10 kHz und einer Phasenverschiebung von +/- 100 Hz,
- FIG 2:: einen Kernbereich der Lissajous-Figur mit der ersten und einer zweiten Frequenz von 10 kHz und einer Phasenverschiebung von +/- 100 Hz,
- FIG 3:: Beispiele von interpolierten Geometrieen der Lissajous-Figur; oben: senkrechte Linien, unten: Quadrate.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Es wurde erfindungsgemäß erkannt, dass zum einen die mechanische Trägheit der Spiegel bzw. der Spiegel im Vergleich mit den Achsen ein erstes Problem ist. Zum anderen liegt das Problem darin, das gewünschte Muster/Darstellungsmuster auf dem Bestrahlungsfeld in einzelne, individuelle Bewegungen/Bestrahlungspunkte anzugeben bzw. zu unterteilen. D.h., es müssen die gewünschten Bestrahlungspunkte auf ein zu belichtendes Standardmuster projiziert werden.

Erfindungsgemäß wurde weiterhin erkannt, dass durch die kontinuierliche Bewegung der Spiegel der Scanner bzw. eines Galvanoskops, das Bestrahlungsfeld, z.B. Pulverbett iterativ, d.h. wiederholt, in definierter bestimmter Art und hinreichend genau bedeckt wird. D.h. es wird ein mechanisch kontinuierlich arbeitendes Projektionsverfahren für laserbasierte (Additive Manufacturing) Prozesse angegeben, welches ein vorgegebenes Muster erzeugt.

Hierzu weist eine Steuerungsvorrichtung einen Laser zur Laserstrahlauslenkung für die Bearbeitung von Bestrahlungspunkten auf einem Bestrahlungsfeld mittels eines Laserstrahls auf. Dabei ist zumindest ein erster orthogonal drehbarer Spiegel und ein zweiter orthogonal drehbarer Spiegel über die der Laserstrahl reflektierbar ist, zum Führen des Laserstrahls zum Bestrahlungsfeld vorgesehen. Der erste Spiegel ist dabei an einer ersten Achse, der zweite Spiegel an einer zweiten Achse befestigt. Der erste drehbare Spiegel ist zum Anregen zu einer kontinuierlichen ersten Schwingung mit einer ersten Frequenz an der ersten Achse befestigt; der zweite drehbare Spiegel ist zum Anregen zu einer kontinuierlichen zweiten Schwingung mit einer zweiten Frequenz an der zweiten Achse befestigt, und wobei die erste Frequenz unterschiedlich zur zweiten Frequenz ist und/oder die erste Schwingung eine Phasendifferenz zur zweiten Schwingung aufweist. Erfindungsgemäß weist jede der beiden Achsen eine bekannte Position auf, sodass durch die bekannte Position der beiden Achsen die erste Schwingung synchron zur zweiten Schwingung ausbildbar ist, sodass eine positionsabhängige Bestrahlung der Bestrahlungspunkte auf dem Bestrahlungsfeld durch positionsabhängiges Ein- und Ausschalten des Lasers bei Erreichen/Verlassen eines solchen Bestrahlungspunkt bewerkstelligbar ist.

Es werden dadurch zwei synchronisierte "deterministische" Schwingungen (=die Position beider Achsen ist von Anfang an exakt bekannt) erzeugt, wobei zur Kalibrierung der beiden Achsen ggf. eine Messung notwendig ist.

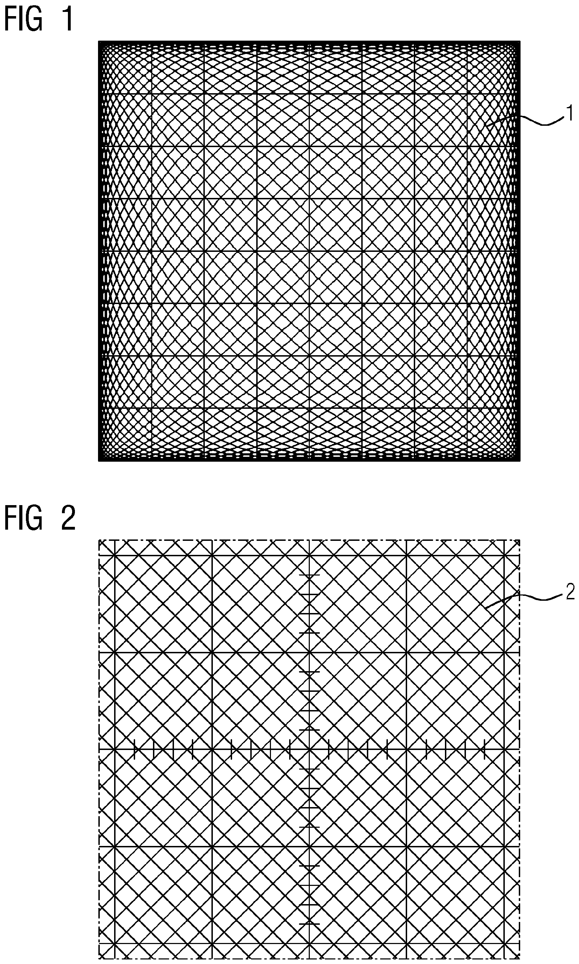

Hierdurch wird eine geeignete Lissajous-Figur kontinuierlich auf das Bestrahlungsfeld, d.h. das Pulverbett, projiziert. FIG 1 zeigt eine Lissajous-Figur, nämlich ein Gitter 1 mit einer ersten und einer zweiten Frequenz von 10 kHz und einer Phasenverschiebung von +/- 100 Hz. Die Frequenzen sind reine Beispiele, bei denen man den Effekt gut sieht.

D.h. erfindungsgemäß wird die zu verfestigenden Schicht auf ein vorgegebenes Muster hier nämlich die Lissajous-Figur, abgebildet.

FIG 2 zeigt als eine vollständige Figur niederer Ordnung die Nutzung nur des inneren Bereichs der obigen Lissajous-Figur, nämlich ein verzerrungsarmes "quasi-Gitter". Hier wird ein nahezu ideales Idealgitter 2 projiziert; Verzerrungen in den Ecken, welche ungenaue Bestrahlung nach sich ziehen könnten, werden vermieden. Dabei wird das Idealgitter 2 in genügend hoher Auflösung auf dem Pulverbett projiziert.

Um kontinuierlich oszillierende Spiegel zu erhalten müssen die beiden Achsen geeignet mechanisch (zueinander) bewegt werden. Dies kann z.B. mittels eines Galvanoskop/Galvanometers mit einem Motor und einer Steuerung oder Spulen vorgenommen werden. Dabei ist es notwendig, eine kontinuierliche Oszillation der beiden Spiegel zu erreichen.

Praktischerweise kann eine mechanische Kopplung zwischen den Spiegeln, d.h. zwischen den Getrieben durch elektronisch oder digital abgestimmte Servomotoren oder Oszillatoren, welche durch ihren Aufbau eine Frequenz beibehalten, vorgenommen werden. Dabei kann die Frequenz beispielsweise die Resonanzfrequenz sein oder durch drehzahlstabile Motoren erzeugt werden. Wesentlich ist hier jedoch die genau bekannte Stellung der Welle.

Mit diesen erfüllten Vorbedingung und einem entsprechenden Stabilitätsniveau des Systems ist es relativ leicht, die relevanten Zustände des Systems zu modellieren:
- Innerhalb einer stabilen Lissajous-Figur können die y- und x-Postionen des Laserstrahls leicht bestimmt werden.
- Das mechanische Verhalten (Resonanzen, Verzerrungen, thermische Verhalten etc.) ist für solch ein kontinuierlich oszillierendes System in einem statisch mechanischen Rahmen (Steifheit, Trägheit, Masse) gut bestimmbar.
- Im Gegensatz zu den vielen dynamischen Zuständen, in welchen die verschiedenen Bewegungen der Spiegel wie Verfahren, Abbremsen, Beschleunigungen, Halten, im Stand der Technik beschrieben werden, gibt es in der Erfindung nur einen dynamischen Status für die ganze Bestrahlung. Dies ist die kontinuierliche Bewegung der Spiegel. Daher kann mehr Aufwand in das Modellieren und die Optimierung von diesem Status verwendet werden. Dies kann eine aktive Dämpfung oder aber eine Verbesserung der Steifheit des Systems sein.

Mit der Erfindung sind die Positionen des Strahls über der Zeit als auch die Fehler des mechanischen Modells sowie möglicherweise das thermische Modell der Schichtbildung bekannt. Dadurch wird ein Mapping von der Modellbeschreibung, welche z.B. durch das zur Verfügung stehende Betriebssystem (NC-Code, GCODE, das ein Design wie einen Punkt oder eine Zeile darstellt) bereitgestellt wird, auf das Muster, welche durch die Lissajous-Figur erzeugt wird, bewerkstelligt. Dabei können beim Mapping Methoden der Bildglättung oder der Mustererkennung, z.B. welche in der Lissajous-Figur verfügbaren Elemente passen am besten zum vom GCODE beschriebenen Design (Punkt, Zig-Zag-Zeile, Zeile, Quadrat), Gebrauch gemacht werden.

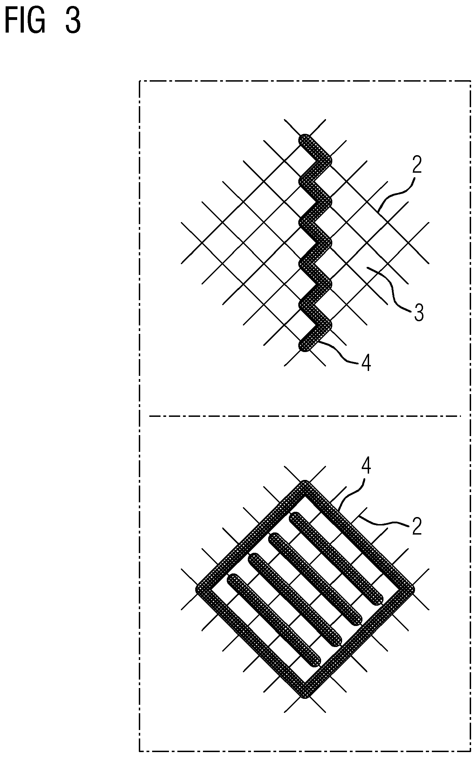

Anschließend wird der Laser jetzt zumindest einmal ausgelöst (oder jedes Mal), wenn der vorherbestimmte Bestrahlungspunkt (oder das vorherbestimmte Zeilensegment) von den Spiegeln angesprochen wird. FIG 3 zeigt Beispiele von auf dem Bestrahlungsfeld projizierten Lissajous-Figuren, d.h. von interpolierten Geometrieen der Lissajous-Figur. Hier ist die Lissajous-Figur jeweils ein Idealgitter 2 und deckt somit das Bestrahlungsfeld durch dieses Idealgitter 2 iterativ ab. Nun setzt an "leeren" Punkten/Zeilen 3 der Laserstrahl aus, während an schwarzen (bedeckten) Punkten 4 der Laserstrahl eingeschaltet wird. Durch die kontinuierliche Schwingung der Spiegel zu einander und des Wissens, wie die Achsen zueinander stehen, ist zu jedem Zeitpunkt bekannt, welche Position der Laserstrahl hat und kann daher an geeigneten Stellen ein- und ausgeschaltet werden. Somit ergibt sich die Bewegungsbahn des Laserstrahls in der Lissajous-Figur. Oben in FIG 3 werden senkrechte Linien durch den Laserstrahls auf dem Bestrahlungsfeld belichtet bzw. verfestigt; unten werden Quadrate belichtet.

Es ist zu beachten, dass die Lissajous-Figur nicht sichtbar auf dem Bestrahlungsfeld abgebildet werden muss; es genügt zu wissen, wann die Spiegel derart positioniert sind, dass ein Bestrahlungspunkt/Linie erreicht worden ist und der Laser zu aktivieren ist.

Auch kann die Geometrie, welche durch das Muster der Lissajous-Figur erzeugt wird, verwendet werden um ganze Bereiche/Linien zu bestrahlen (z.B. Zick-Zack Linien der FIG 3) .

Die Lissajous-Figur kann auch alternierend, nach zu bestrahlenden Bestrahlungspunkten oder schichtweise verwendet werden sowie nach geforderter Auflösung (grobe Auflösung = Niederfrequenzen + hohe Laserleistung etc.). Auch kann eine verbesserte Verbindung zwischen den einzelnen zu bestrahlenden Schichten ("Mauerwerksstil") erzielt werden. Auch kann durch die Erfindung eine Bestrahlung von gekrümmten Grenzgeometrieen verwirklicht werden, welche z.B. notwendig sind, um statisch vorteilhafte Geometrieen zu generieren, z.B. "geodätisches Design".

Durch die Erfindung wird ein fortlaufender, oszillierender Status/Zustandes für das Laserscanning erzeugt, welcher leicht und genau modelliert und optimiert werden kann. Auf diese Art wird die Komplexität der Dynamik beträchtlich reduziert, welches einerseits die Kosten reduziert und andererseits die Stabilität und Vorhersagbarkeit von der Maschine verbessert. Die elektrische Aktivität, welche benötigt wird, um einen Bestrahlungspunkt anzusprechen, nämlich im Wesentlichen das Anschalten des Lasers, ist in einer stabilen Lissajous-Figur immer gleich.

Aufgrund der fortlaufenden vollen Abdeckung des Bestrahlungsfeldes durch die Lissajous-Figur können fortschrittliche Bestrahlungsstrategien, z.B. ähnlich zu den "Multi-Strahl" beim (Selektiven) Elektronenstrahlschmelzen (S)EBM, leicht angewandt werden. Auch können sogenannte Kontrollpunkte für das Testen/Überwachen/Kalibrieren (Geometrie, Laserleistung) mit großer Häufigkeit bereitgestellt werden.

Vorteilhafterweise hängt die Fertigstellung des Bauteils nun nicht mehr von dem Maß ab, wie das Bestrahlungsfeld gestaltet ist oder welche zusätzlichen Features (Referenzteile, Kontrollpunkt) zum Einsatz kommen. Durch die Erfindung erfordert jede Bestrahlung mit derselben z-Auflösung und der absoluten z-Höhe dieselbe Zeit. Ausgewählte Bestrahlungspunkte/Bestrahlungslinien können jedoch mehrfachbestrahlt werden oder leere Schichten ausgelassen werden. Durch die Erfindung ergeben sich daher weitere folgende Vorteile:

Es existiert eine kontinuierliche, einfache Schwingung der mechanischen Teile im Gegensatz zu den getrennten (diskreten), hoch individuellen (einzelnen) Bewegungen. Dadurch entstehen keine Probleme mit dem Abbremsen/Beschleunigen etc.. Zudem werden erfindungsgemäß die inhärenten Mustergeometrieen (Gitter), der Lissajous-Figuren verwendet, um die Bestrahlung der Bestrahlungspunkte ("Linienmuster") zu generieren. Auch sind durch die Erfindung die Vorteile eines Elektronenstrahlschmelzprozesses mit quasi-simultanen Brennflecken anwendbar.

Die hier vorgeschlagene kontinuierliche Bewegung der Spiegel und das Bewegungsmuster passen inhärent zum Designparadigma von "lattice-Gitter" (Darstellung von geometrischen Körpern durch eine lokale modifizierte unendliche Serie von Elementen), welche gegenwärtig verwendet wird, um das volle Potential der Additiven Fertigungen in CAD-Systemen (hohe Anzahl von Elementen, bionische Formen, räumliche Konsistenzen) zu nutzen.

## Patentansprüche

1. Verfahren zur Steuerung der Laserstrahlauslenkung für die Bearbeitung von Bestrahlungspunkten auf einem Bestrahlungsfeld mittels eines Laserstrahls für laserbasierte Additive Manufacturing Prozesse mit den Schritten:
- Führen des Laserstrahls zum Bestrahlungsfeld durch Reflektion von zumindest einen ersten über einen zweiten orthogonal drehbaren stehenden Spiegel,
- Befestigung des ersten Spiegels an einer ersten Achse und des zweiten Spiegels an einer zweiten Achse, das Verfahren **gekennzeichnet durch** folgende weitere Schritte:
- Anregung des ersten drehbaren Spiegels zu einer kontinuierlichen ersten Schwingung mit einer ersten Frequenz durch die erste Achse,
- Anregung des zweiten drehbaren Spiegels zu einer kontinuierlichen zweiten Schwingung mit einer zweiten Frequenz durch die zweite Achse,
- Ausgestalten der ersten Frequenz unterschiedlich zur zweiten Frequenz und/oder Aufweisen einer Phasendifferenz von der ersten Schwingung zur zweiten Schwingung,
- Aufweisen einer bekannten Position von jeder der beiden Achsen, so dass durch die bekannte Position der beiden Achsen die erste Schwingung synchron zur zweiten Schwingung ausbildbar ist,
- sodass eine positionsabhängige Bestrahlung der Bestrahlungspunkte auf dem Bestrahlungsfeld durch positionsabhängiges Ein- / Ausschalten des Lasers bei Erreichen/Verlassen von einem solchen Bestrahlungspunkt bewerkstelligt wird,
- wobei durch die erzeugten Schwingungen der Spiegel eine kontinuierliche Lissajous-Figur auf dem Bestrahlungsfeld beschrieben wird.

2. Verfahren zur Steuerung der Laserstrahlauslenkung nach Anspruch 1, **dadurch gekennzeichnet, dass** die Frequenzen und die Phasenverschiebung so gewählt werden, dass die Lissajous-Figur als ein Gitter (1) mit hinreichender Genauigkeit ausgestaltet wird.

3. Verfahren zur Steuerung der Laserstrahlauslenkung nach Anspruch 1 oder 2, **dadurch gekennzeichnet, dass** die erste als auch die zweite Frequenz und die Phasenverschiebung derart ausgestaltet sind, sodass die Lissajous-Figur als ein inneres verzerrungsarmes Idealgitter (2) und ein äußeres Außengitter ausgebildet wird.

4. Verfahren zur Steuerung der Laserstrahlauslenkung nach einem der vorhergehenden Ansprüche 1-3, **dadurch gekennzeichnet, dass** verschiedene Schichten zur iterativen Bestrahlung durch den Laserstrahl bestrahlt werden, wobei zur Bestrahlung einer ersten Schicht eine erste Lissajous-Figur und zur Bestrahlung einer weiteren Schicht eine zweite Lissajous-Figur durch die Spiegel erzeugt wird, welche beide für die Bestrahlung der jeweiligen Schicht herangezogen werden.

5. Verfahren zur Steuerung der Laserstrahlauslenkung nach einem der vorhergehenden Ansprüche 1-4, **dadurch gekennzeichnet, dass** eine iterative Mehrfachbestrahlung der Bestrahlungspunkte vorgenommen wird.

6. Verfahren zur Steuerung der Laserstrahlauslenkung nach einem der vorhergehenden Ansprüche 1-5, **dadurch gekennzeichnet, dass** zur Positionsbestimmung der ersten als auch der zweiten Achse eine Kalibrierung der Achsen vorgenommen wird.

## Claims

1. Method for controlling the laser beam deflection for the processing of irradiation points in an irradiation field by means of a laser beam for laser-based additive manufacturing processes, with the steps:
- guiding the laser beam to the irradiation field by reflection from at least a first via a second orthogonally rotatable vertical mirror,
- securing of the first mirror on a first shaft and of the second mirror on a second shaft, the method being **characterised by** the following further steps:
- excitation of the first rotatable mirror to a continuous first vibration with a first frequency by the first shaft,
- excitation of the second rotatable mirror to a continuous second vibration with a second frequency by the second shaft,
- embodiment of the first frequency different to the second frequency and/or there being a phase difference between the first vibration and the second vibration,
- having a known position of each of the two shafts, such that the first vibration can be generated synchronously to the second vibration via the known position of the two shafts,
- such that a position-dependent irradiation of the irradiation points in the irradiation field is brought about by position-dependent activation/deactivation of the laser upon reaching/leaving an irradiation point of this type,
- wherein a continuous Lissajous curve is described in the irradiation field via the generated vibrations of the mirrors.

2. Method for controlling the laser beam deflection according to claim 1,
**characterised in that** the frequencies and the phase difference are selected such that the Lissajous curve is embodied as a grid (1) with sufficient precision.

3. Method for controlling the laser beam deflection according to claim 1 or 2,
**characterised in that** the first and also the second frequency and the phase difference are embodied such that the Lissajous curve is embodied as an internal low-distortion ideal grid (2) and an external grid.

4. Method for controlling the laser beam deflection according to one of the preceding claims 1-3,
**characterised in that** different layers are irradiated for iterative irradiation by the laser beam, wherein a first Lissajous curve is generated by the mirrors for irradiation of a first layer and a second Lissajous curve for irradiation of a further layer, which are both employed for the irradiation of the respective layer.

5. Method for controlling the laser beam deflection according to one of the preceding claims 1-4,
**characterised in that** an iterative multiple irradiation of the irradiation points is undertaken.

6. Method for controlling the laser beam deflection according to one of the preceding claims 1-5,
**characterised in that** a calibration of the shafts is undertaken for determining the position of the first and also of the second shaft.

## Revendications

1. Procédé de commande de la déviation d'un rayonnement laser pour le traitement de points d'exposition sur un champ d'exposition au moyen d'un faisceau laser pour des procédés additive manufacturing par laser, comprenant les stades :
- guidage du faisceau laser vers le champ d'exposition, par réflexion par au moins un premier miroir, en rotation orthogonalement par rapport à un deuxième,
- fixation du premier miroir sur un premier axe et du deuxième miroir sur un deuxième axe,
le procédé étant **caractérisé par** les autres stades suivants :
- excitation du premier miroir tournant en une première oscillation continue d'une première fréquence par le premier axe,
- excitation du deuxième miroir tournant en une deuxième oscillation continue d'une deuxième fréquence par le deuxième axe,
- conformation de la première fréquence différemment de la deuxième fréquence et/ou avoir une différence de phase de la première oscillation à la deuxième oscillation,
- avoir une position connue de chacun des deux axes, de sorte que, par la position connue des deux axes, la première oscillation peut être constituée en étant synchrone de la deuxième oscillation,
- de sorte qu'une exposition, qui dépend de la position des points d'exposition sur le champ d'exposition, soit provoquée par mise en circuit/hors circuit, en fonction de la position, du laser, lorsque est atteint / et quitté un tel point d'exposition,
- dans lequel, par la production des oscillations des miroirs, on décrit une figure de Lissajous continue sur le champ d'exposition.

2. Procédé de commande de la déviation d'un faisceau laser suivant la revendication 1,
**caractérisé**
**en ce que** l'on choisit les fréquences et le déphasage de manière à conformer la figure de Lissajous sous la forme d'un réseau (1) d'une précision suffisante.

3. Procédé de commande de la déviation d'un faisceau laser suivant la revendication 1 ou 2,
**caractérisé en ce que**
l'on conforme la première, ainsi qu'également la deuxième fréquence et le déphasage, de manière à ce que la figure de Lissajous soit constituée sous la forme d'un réseau (2) idéal intérieur ayant peu de distorsion et d'un réseau extérieur.

4. Procédé de commande de la déviation d'un faisceau laser suivant l'une des revendications précédentes 1 à 3,
**caractérisé en ce que**
l'on expose diverse couches pour le rayonnement itératif au faisceau laser, dans lequel, pour l'exposition d'une première couche, on produit une première figure de Lissajous, et pour l'exposition d'une autre couche, une deuxième figure de Lissajous par les miroirs, qui sont mis tous deux à profit pour l'exposition de la couche respective.

5. Procédé de commande de la déviation d'un faisceau laser suivant l'une des revendications précédentes 1 à 4,
**caractérisé en ce que**
l'on effectue une exposition multiple itérative des points d'exposition.

6. Procédé de commande de la déviation d'un faisceau laser suivant l'une des revendications précédentes 1 à 5,
**caractérisé en ce que**,
pour déterminer la position du premier ainsi que du deuxième axe, on effectue un étalonnage des axes.
